# EUROPÄISCHE PATENTSCHRIFT

(11) **EP 3 270 022 B1**
(45) Veröffentlichungstag und Bekanntmachung des Hinweises auf die Patenterteilung: **13.03.2019**
(21) Anmeldenummer: 17176906.0
(22) Anmeldetag: 20.06.2017
(51) Int. Cl.: F16K 35/02, F16K 31/60, E03C 1/04

(54) **DREHGRIFF FÜR EIN THERMOSTATISCH GEREGELTES VENTIL EINER SANITÄRARMATUR MIT EINEM EINSTELLBAREN ZWISCHENANSCHLAG**
ROTARY HANDLE FOR A THERMOSTATICALLY REGULATED VALVE OF A SANITARY FITTING WITH AN ADJUSTABLE INTERMEDIATE STOP
POIGNÉE TOURNANTE POUR UNE VANNE THERMOSTATIQUE D'UNE ROBINETTERIE COMPRENANT UNE BUTÉE INTERMÉDIAIRE RÉGLABLE

(30) Priorität: 28.06.2016 DE 102016007792
(43) Veröffentlichungstag der Anmeldung: 17.01.2018
(73) Patentinhaber: Grohe AG, 58675 Hemer (DE)
(72) Erfinder: Kinikarslan, Turgut, Witten (DE); Luig, Frank-Thomas, Menden (DE)

(56) Entgegenhaltungen:
- DE-A1- 4 123 856
- DE-A1-102009 021 185

## Beschreibung

Die vorliegende Erfindung betrifft einen Drehgriff für ein thermostatisch geregeltes Ventil einer Sanitärarmatur. Solche Sanitärarmaturen werden regelmäßig im Zusammenhang mit Spültischen, Waschtischen, Duschen und/oder Badewannen verwendet.

Aus dem Stand der Technik sind Sanitärarmaturen nach Art von Thermostatmischbatterien mit einem Drehgriff zur Einstellung einer Mischwassertemperatur und einem Drehgriff zur Einstellung einer Entnahmemenge eines Mischwassers bekannt. Bei Thermostatmischbatterien beziehungsweise thermostatisch geregelten Mischventilen für Sanitärarmaturen mit Temperaturweggebern/Ventilelementen in Form von Dehnstoffelementen ist das Verhältnis zwischen einem Drehwinkel des Drehgriffs für die Mischwassertemperatur und dem Weg des Ventilelements im Wesentlichen linear. Das bedeutet, dass der Weg des Ventilelements pro Schrittwinkel des Drehgriffs in einem Niedrigtemperaturbereich unter 25 °C (Celsius), in einem Mitteltemperaturbereich von 25 °C bis 40 °C und einem Hochtemperaturbereich von über 40 °C im Wesentlichen gleichförmig ist. Bei Thermostatmischbatterien wird jedoch erwartet, dass gerade im mittleren Temperaturbereich eine Feineinstellung der Mischwassertemperatur möglich ist. Daher werden für die Temperaturweggeber Dehnstoffelemente mit besonderen Kennlinien gewählt. Dehnstoffelemente mit mäßig steilen Kennlinien gewährleisten eine feine Regulierung der Mischwassertemperatur, benötigen jedoch einen besonders großen Drehbereich des Drehgriffs. Dies geht jedoch zu Lasten der einstellbaren/wählbaren Kalt- oder Warmwasservorlauftemperaturen, da der Drehwinkel des Drehgriffs durch die notwendigen Festanschläge beschränkt ist.

Daher ist beispielsweise aus der DE 10 2009 021 185 A1 ein Drehgriff mit einem Schleppanschlag bekannt, der in einer Drehrichtung des Drehgriffs entlang einer Schleppbahn beweglich ist, sodass der Drehgriff an der Sanitärarmatur um einen Drehwinkel von beispielsweise mehr als 360° drehbar ist. Weiterhin weist der Drehgriff einen Zwischenanschlag in Form einer Anschlagwippe auf, durch den einem Benutzer bestimmte Einstellpositionen des Ventilelements, bei Thermostatmischbatterien beispielsweise eine bestimmte "Komfort-Temperatur", signalisierbar sind. Bei diesen Drehgriffen ist ein Kaltwasserendanschlag und ein Heißwasserendanschlag jedoch nur dann erreichbar, wenn sich der Zwischenanschlag beziehungsweise die Anschlagwippe in einer 38 °C-Stellung befindet. Würde der Zwischenanschlag in einer 43 °C-Stellung angeordnet sein, wäre eine Kaltwasseranschlagtemperatur nicht erreichbar. Würde der Zwischenanschlag in einer 35 °C-Stellung angeordnet sein, wäre demgegenüber eine Heißwasseranschlagtemperatur nicht erreichbar. Dieses Problem ist durch eine einfache Vergrößerung der Schleppbahn des Schleppanschlags nicht lösbar, weil beim Verstellen des Drehgriffs in Richtung des Kaltwassers bei einem zum Beispiel auf 33 °C justierten Zwischenanschlag eine Drehwinkelreserve zum Überrasten einer Überlasteinheit des Mischventils zu klein wäre beziehungsweise beim Verstellen des Drehgriffs in Richtung Heißwasser bei einem zum Beispiel auf 45 °C justierten Zwischenanschlag über ein Trapezgewinde der Überlasteinheit Kräfte in eine Reguliermutter des Mischventils eingeleitet würden.

Ein weiterer Drehgriff mit verstellbarem Zwischenanschlag ist aus DE4123856 bekannt.

Aufgabe der Erfindung ist daher, die mit Bezug auf den Stand der Technik geschilderten Probleme zumindest teilweise zu lösen und insbesondere einen Drehgriff für ein thermostatisch geregeltes Ventil einer Sanitärarmatur anzugeben, bei dem eine durch einen Zwischenanschlag signalisierte Mischwassertemperatur einstellbar ist.

Diese Aufgabe wird gelöst mit einem Drehgriff gemäß den Merkmalen des unabhängigen Patentanspruchs. Weitere vorteilhafte Ausgestaltungen des Drehgriffs sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Der erfindungsgemäße Drehgriff für ein thermostatisch geregeltes Ventil einer Sanitärarmatur weist einen Innengriff mit einem Unterteil und einem Oberteil auf, wobei an dem Unterteil ein Zwischenanschlag und ein Schleppanschlag angeordnet sind, wobei der Schleppanschlag in einer Drehrichtung des Drehgriffs entlang einer Schleppbahn zwischen einem Kaltwasseranschlag und einem Heißwasseranschlag bewegbar ist, und wobei das Unterteil und das Oberteil des Innengriffs zur Einstellung einer durch den Zwischenanschlag signalisierten Mischwassertemperatur eines mit der Sanitärarmatur gezapften Mischwassers relativ zueinander verdrehbar sind.

Der hier vorgeschlagene Drehgriff dient insbesondere der Einstellung einer Mischwassertemperatur eines thermostatisch geregelten Ventils einer Sanitärarmatur, bei der es sich insbesondere um eine Thermostatmischarmatur beziehungsweise Thermostatmischbatterie handelt. Mittels der Sanitärarmatur sind ein Kaltwasser mit einer Kaltwassertemperatur und ein Heißwasser mit einer Heißwassertemperatur zu einem Mischwasser mit einer gewünschten Mischwassertemperatur mischbar. Die Kaltwassertemperatur beträgt insbesondere maximal 25 °C, bevorzugt 1 °C bis 25 °C, besonders bevorzugt 5 °C bis 20 °C und/oder die Heißwassertemperatur insbesondere maximal 90 °C, bevorzugt 25 °C bis 90 °C, besonders bevorzugt 55 °C bis 65 °C. An dem Ventil ist bevorzugt ein um eine Drehachse des Drehgriffs bewegbares Betätigungsglied, beispielsweise nach Art einer Reguliermutter, angeordnet, mit dem ein Ventilelement, beispielsweise nach Art eines Dehnstoffelements, bewegbar ist. Mittels des Dehnstoffelements ist die durch den Drehgriff eingestellte Mischwassertemperatur regelbar.

Zur Einstellung der gewünschten Mischwassertemperatur weist der Drehgriff einen Innengriff mit einem Unterteil und einem Oberteil auf. Der Innengriff ist somit (zumindest) zweiteilig ausgebildet. Das Unterteil und/oder das Oberteil sind bevorzugt zumindest teilweise rohrförmig beziehungsweise hülsenförmig ausgebildet und/oder sind zumindest teilweise aus Kunststoff oder Metall gefertigt. Das Oberteil kann zudem ebenfalls bevorzugt haubenförmig, deckelförmig und/oder topfförmig ausgebildet sein. Der Innengriff ist mit dem Unterteil und dem Oberteil um die Drehachse des Drehgriffs drehbar, wobei durch die Drehung des Innengriffs insbesondere ein Betätigungsglied beziehungsweise eine Reguliermutter der Sanitärarmatur verstellbar ist.

An dem Unterteil sind ein Zwischenanschlag, beispielsweise nach Art einer Taste und/oder einer Anschlagwippe, und ein Schleppanschlag angeordnet. Sowohl der Zwischenanschlag als auch der Schleppanschlag wirken bei der Drehung des Drehgriffs um die Drehachse mit einem ortsfesten Anschlagnocken der Sanitärarmatur zusammen und können dabei eine Drehbewegung des Drehgriffs um eine Drehachse in zumindest eine Drehrichtung blockieren. Beim Drehen des Drehgriffs ist der Schleppanschlag durch den Anschlagnocken entlang einer Schleppbahn zwischen einem Kaltwasseranschlag und einem Heißwasseranschlag bewegbar. Bei Erreichen des Kaltwasseranschlags befindet sich der Drehgriff in einer ersten Endposition, bei der sich das Mischventil beispielweise an einem Kaltwasserendanschlag befindet und somit die Mischwassertemperatur einer Kaltwasservorlauftemperatur (zum Beispiel 10 °C) des Kaltwassers entspricht. Bei Erreichen des Heißwasseranschlags befindet sich der Drehgriff in einer zweiten Endposition, bei der sich das Mischventil beispielweise an einem Heißwasserendanschlag befindet und somit die Mischwassertemperatur einer Heißwasservorlauftemperatur (zum Beispiel 80 °C) des Heißwassers entspricht.

Wenn sich der Drehgriff in der ersten Endposition befindet, berührt der Schleppanschlag den Kaltwasseranschlag, sodass eine weitere Drehung des Drehgriffs in einer ersten Drehrichtung um die Drehachse in Richtung "kalt" blockiert ist. In der ersten Endposition befindet sich der Anschlagnocken der Sanitärarmatur auf der Schleppbahn des Schleppanschlags auf einer dem Kaltwasseranschlag gegenüberliegenden Seite des Schleppanschlags. In der ersten Endposition ist der Drehgriff lediglich in einer zweiten Drehrichtung um die Drehachse in Richtung "warm" drehbar, die der ersten Drehrichtung entgegengesetzt ist. Ausgehend von der ersten Endposition entfernt sich der Schleppanschlag bei einer Drehung des Drehgriffs in der zweiten Drehrichtung um die Drehachse in Richtung "warm" zunächst von dem Anschlagnocken der Sanitärarmatur, bis dass der Schleppanschlag den Anschlagnocken der Sanitärarmatur nach einer ca. 360°-Umdrehung des Drehgriffs in der zweiten Drehrichtung um die Drehachse in Richtung "warm" auf einer gegenüberliegenden Seite des Anschlagnockens der Sanitärarmatur wieder erreicht. Bei einer weiteren Drehung des Drehgriffs in der zweiten Drehrichtung um die Drehachse in Richtung "warm" wird der Schleppanschlag durch den Anschlagnocken der Sanitärarmatur entlang der Schleppbahn verstellt, bis dass der Schleppanschlag den Heißwasseranschlag erreicht und dadurch blockiert wird. Der Drehgriff hat damit die zweite Endposition erreicht, in der eine weitere Drehung des Drehgriffs in der zweiten Drehrichtung um die Drehachse in Richtung "warm" nicht mehr möglich ist. In der zweiten Endposition liegt der Schleppanschlag an dem Heißwasseranschlag an. Aus der zweiten Endposition kann der Drehgriff lediglich in der ersten Drehrichtung um die Drehachse in Richtung "kalt" in entsprechender Weise gedreht werden, bis dass der Drehgriff die erste Endposition wieder erreicht hat. Der Drehwinkel des Drehgriffs um die Drehachse zwischen der ersten Endposition und der zweiten Endposition beträgt bevorzugt mindestens 360°, besonders bevorzugt 360° bis 540° oder ganz besonders bevorzugt 380° bis 520°.

Weiterhin weist das Unterteil des Innengriffs einen Zwischenanschlag, beispielweise nach Art einer Taste und/oder einer Anschlagwippe, auf. Dieser Zwischenanschlag ist insbesondere in einer (einzigen) der beiden Drehrichtungen des Drehgriffs um die Drehachse, bevorzugt in der ersten Drehrichtung des Drehgriffs um die Drehachse in Richtung "kalt", durch den Anschlagnocken der Sanitärarmatur (ohne einen Eingriff beziehungsweise eine (mechanische) Freigabe des Benutzers der Sanitärarmatur) überwindbar und dient in der entgegengesetzten Drehrichtung des Drehgriffs um die Drehachse, bevorzugt der zweiten Drehrichtung des Drehgriffs um die Drehachse in Richtung "warm", als lösbarer Anschlag, der durch einen Eingriff beziehungsweise eine (mechanische) Freigabe des Benutzers der Sanitärarmatur lösbar ist. Der Zwischenanschlag weist hierzu insbesondere eine abgeschrägte Anschlagnase auf, durch die der Anschlagnocken den Zwischenanschlag in einer (einzigen) der beiden Drehrichtungen des Drehgriffs um die Drehachse (ohne einen Eingriff beziehungsweise eine (mechanische) Freigabe des Benutzers der Sanitärarmatur) überwinden kann. Dies bedeutet, dass in einer (einzigen) der beiden Drehrichtungen des Drehgriffs um die Drehachse der Zwischenanschlag durch seine abgeschrägte Anschlagnase über den feststehenden Anschlagnocken hinweggleiten kann. Weiterhin bedeutet dies auch, dass eine Drehung des Drehgriffs um die Drehachse durch den Zwischenanschlag nur in einer (einzigen) der beiden Drehrichtungen des Drehgriffs um die Drehachse (lösbar) blockierbar ist. Die grundsätzliche Funktionsweise des Drehgriffs ist in den Absätzen [0008] bis [0038] der DE 10 2009 021 185 A1 beschrieben, die hiermit vollständig in Bezug genommen werden. Zur Freigabe des Zwischenanschlags durch einen Benutzer kann der Drehgriff beispielswiese eine Taste oder einen Schieber aufweisen. Mittels des Zwischenanschlags können einem Benutzer der Sanitärarmatur bestimmte Einstellpositionen des Ventilelements beziehungsweise bestimmte Mischwassertemperaturen (zum Beispiel 38 ° C), bei Thermostatarmaturen beziehungsweise Thermostatmischbatterien beispielsweise eine bestimmte "Komfort-Temperatur", signalisiert werden.

Der durch die DE 10 2009 021 185 A1 offenbarte Zwischenanschlag des Drehgriffs nach Art einer Anschlagwippe signalisiert dem Benutzer der Sanitärarmatur in einer Anschlagposition des Zwischenanschlags mit dem Anschlagnocken der Sanitärarmatur eine bestimmte, fest vorgegebene Mischwassertemperatur (insbesondere 38 °C). Die Mischwassertemperatur in der Anschlagposition des Zwischenanschlags ist jedoch fix beziehungsweise nicht einstellbar, sodass für unterschiedliche zu signalisierende Mischwassertemperaturen eine Vielzahl von Varianten des Innengriffs mit an verschiedenen Stellen des Innengriffs positionierten Zwischenanschlägen hergestellt werden müssen, was zu hohen Kosten und hohem Logistikaufwand führt. Daher sind bei dem erfindungsgemäßen Drehgriff das Unterteil und das Oberteil des Innengriffs zur Einstellung der durch den Zwischenanschlag zu signalisierenden Mischwassertemperatur relativ zueinander um die Drehachse des Drehgriffs verdrehbar. Die Ausrichtung des Unterteils und des Oberteils zueinander erfolgt vorzugsweise bei der Montage des Drehgriffs derart, dass sich der Zwischenanschlag an einer Position befindet, die eine gewünschte zu signalisierende Mischtemperatur beim Eingriff des Zwischenanschlags mit dem Anschlagnocken der Sanitärarmatur darstellt. Anschließend wird die Ausrichtung zwischen dem Unterteil und dem Oberteil bevorzugt fixiert, sodass das Unterteil und das Oberteil bei einem späteren Betrieb des Drehgriffs relativ zueinander nicht mehr verdrehbar sind.

Die vorliegende Erfindung ermöglicht, dass bei verschiedenen Mischwassertemperaturen des Zwischenanschlags immer ein optimaler Drehwinkelbereich zum Erreichen des Kaltwasseranschlags und des Heißwasseranschlags vorliegt. Als weiteren Vorteil der vorliegenden Erfindung hat sich herausgestellt, dass sich durch eine Veränderung der Mischwassertemperatur des Zwischenanschlags die Optik der beiden Drehgriffe der Sanitärarmatur für die Mischwassertemperatur und der Entnahmemenge des Mischwassers nicht ändert. Insbesondere können die beiden Drehgriffe Bedienhilfen für den Benutzer in Form von Betätigungsflügeln oder Grifftasten aufweisen, die in einer geschlossenen Stellung der Sanitärarmatur, das heißt wenn kein Mischwasser entnommen wird, zueinander ausgerichtet sein sollen, um eine vorteilhafte Optik der Sanitärarmatur zu gewährleisten. Dies ist bei den bekannten Drehgriffen jedoch nur in einer einzigen Temperaturstellung des Zwischenanschlags möglich. Durch die zweiteilige Ausführung des Innengriffs wird jedoch ermöglicht, dass die Mischwassertemperatur des Zwischenanschlags veränderbar ist, ohne dass der Drehgriff in der Zwischenanschlagstellung verdreht wird.

Ebenfalls vorteilhaft ist es, wenn die signalisierte Mischwassertemperatur 35 °C bis 43 °C beträgt.

Weiterhin ist es vorteilhaft, wenn das Oberteil zumindest teilweise in dem Unterteil angeordnet ist.

Darüber hinaus ist es vorteilhaft, wenn das Unterteil eine teilkreisförmige erste Nut aufweist, in der das Oberteil zumindest teilweise angeordnet ist.

Zudem ist es vorteilhaft, wenn der Kaltwasseranschlag und der Heißwasseranschlag an dem Oberteil des Innengriffs angeordnet sind.

Ebenfalls vorteilhaft ist es, wenn sich der Kaltwasseranschlag und der Heißwasseranschlag zumindest teilweise parallel zu einer Drehachse des Drehgriffs erstrecken.

Des Weiteren ist es vorteilhaft, wenn das Unterteil und das Oberteil mittels einer Griffhülle gegen ein Verdrehen zueinander gesichert sind. Die Griffhülle ist insbesondere haubenförmig ausgebildet und/oder umschließt das Unterteil und das Oberteil des Innengriffs zumindest teilweise. Die Griffhülle stellt insbesondere eine Außenhülle des Drehgriffs dar, über die die Mischwassertemperatur des gezapften Mischwassers durch den Benutzer einstellbar ist.

Weiterhin ist es vorteilhaft, wenn das Unterteil eine zweite Nut aufweist, in die die Griffhülle eingreift.

Zudem ist es vorteilhaft, wenn sich die zweite Nut parallel zu einer Drehachse des Drehgriffs erstreckt.

Ebenfalls vorteilhaft ist es, wenn eine Drehbewegung des Drehgriffs über das Oberteil des Innengriffs auf eine Reguliermutter des Ventils übertragbar ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur mit einem Drehgriff in einer Explosionsdarstellung;
- Fig. 2:: einen Innengriff des Drehgriffs mit einem Zwischenanschlag in einer 40 °C-Stellung;
- Fig. 3:: den Innengriff mit dem Zwischenanschlag in einer 35 °C-Stellung; und
- Fig. 4:: den Innengriff mit dem Zwischenanschlag in einer 43 °C-Stellung.

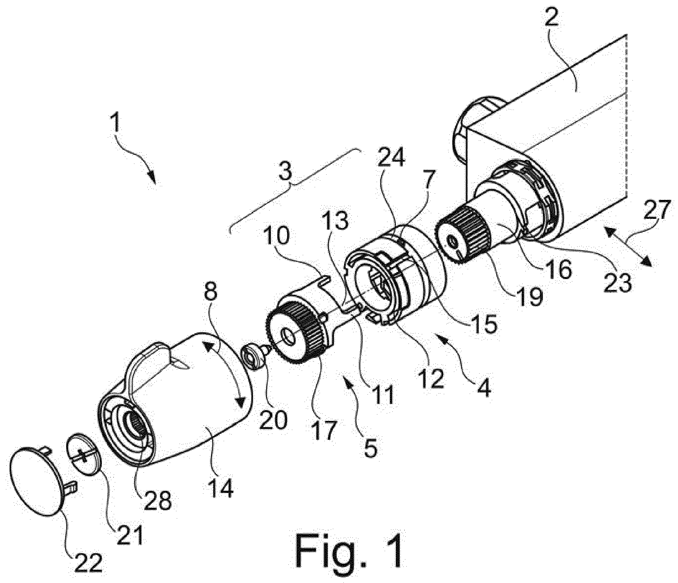

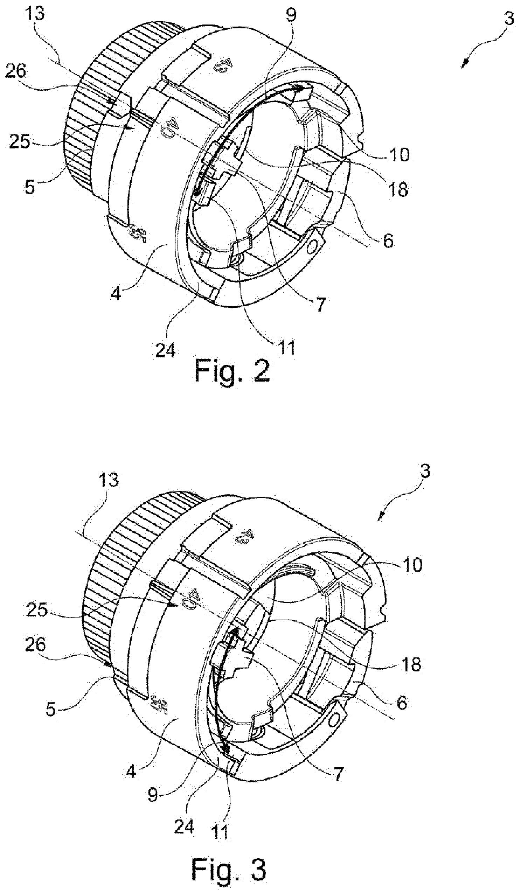

Die Fig. 1 zeigt eine Sanitärarmatur 2 mit einem Drehgriff 1 in einer Explosionsdarstellung. Der Drehgriff 1 weist einen zweiteiligen Innengriff 3 mit einem Unterteil 4 und einem Oberteil 5 auf. An dem Oberteil 5 ist ein Kaltwasseranschlag 10 und ein Heißwasseranschlag 11 ausgebildet, die sich parallel zu einer Drehachse 13 des Drehgriffs 1 erstrecken. Das Oberteil 5 ist mit dem Kaltwasseranschlag 10 und dem Heißwasseranschlag 11 in eine teilkreisförmige erste Nut 12 des Unterteils 4 in das Unterteil 4 einsteckbar. Dort begrenzen der Kaltwasseranschlag 10 und der Heißwasseranschlag 11 eine in den Fig. 2 - 4 gezeigte Schleppbahn 9 eines Schleppanschlags 7, die bei der vorliegenden Ausführungsvariante entlang einer dritten Nut 24 des Unterteils 4 führt. Der Innengriff 3 ist mittels einer inneren Befestigungsschraube 20 an einer Reguliermutter 16 eines hier nicht gezeigten Thermostatventils der Sanitärarmatur 2 befestigbar. An der Sanitärarmatur 2 ist ein Anschlagnocken 23 ortsfest angeordnet, der sich in eine radiale Richtung 27 erstreckt. Der Anschlagnocken 23 kommt beim Drehen des Drehgriffs 1 um die Drehachse 13 mit dem Schleppanschlag 7 und dem in den Fig. 2 - 4 gezeigten Zwischenanschlag 6 in Eingriff. Die Reguliermutter 16 weist eine dritte Riefenverzahnung 19 auf, die im montierten Zustand der Sanitärarmatur 2 mit einer in den Fig. 2 - 4 gezeigten zweiten Riefenverzahnung 18 des Oberteils 5 in Eingriff steht, sodass das Oberteil 5 und die Reguliermutter 16 relativ zueinander drehfest verbunden sind. Weiterhin weist das Unterteil 4 eine zweite Nut 15 auf, in die ein hier nicht gezeigter Steg einer Griffhülle 14 eingreift, um das Unterteil 4 und das Oberteil 5 nach Einstellung einer durch einen in den Fig. 2 - 4 gezeigten Zwischenanschlag 6 zu signalisierenden Mischwassertemperatur relativ zueinander drehfest zu verbinden. Hierzu greift eine erste Riefenverzahnung 17 des Oberteils 5 in eine vierte Riefenverzahnung 28 der Griffhülle 14 ein. Die Griffhülle 14 ist mit einer äußeren Befestigungsschraube 21 an dem Innengriff 3 befestigbar, wobei die äußere Befestigungsschraube 21 durch eine Griffkappe 22 verdeckbar ist. Der Drehgriff 1 ist relativ zu der Sanitärarmatur 2 in einer Drehrichtung 8 um die Drehachse 13 drehbar.

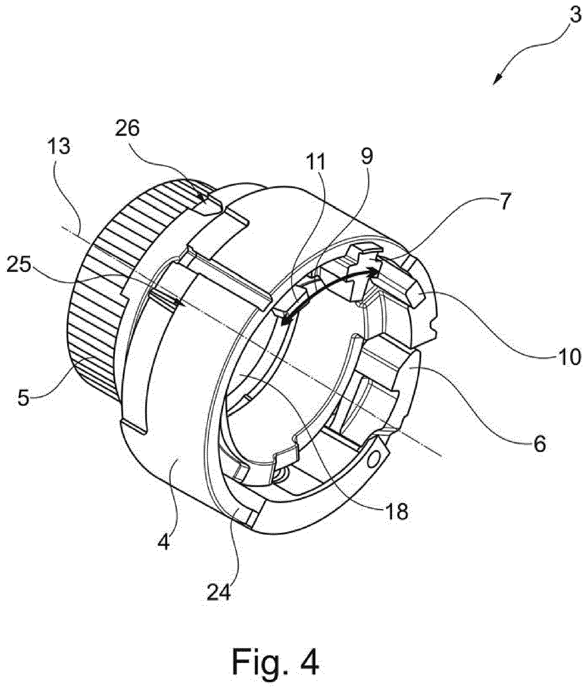

Die Fig. 2 - 4 zeigen den Innengriff 3 mit dem Unterteil 4 und dem Oberteil 5. Das Unterteil 4 weist eine Skala 25 auf, mittels der das Oberteil 5 relativ zu dem Unterteil 4 um die Drehachse 13 auf eine bestimmte zu signalisierende Mischwassertemperatur des Zwischenanschlags 6, der hier nach Art einer Anschlagwippe ausgebildet ist, einstellbar ist. Hierzu weist das Oberteil 5 eine Markierung 26 auf, die die zu signalisierende Mischwassertemperatur auf der Skala 25 anzeigt. Bei den Fig. 2 - 4 handelt es sich um Schnittdarstellungen entlang der in der Fig. 1 gezeigten dritten Nut 24 des Unterteils 4. Der Schleppanschlag 7 ist entlang einer Schleppbahn 9 zwischen dem Kaltwasseranschlag 10 und dem Heißwasseranschlag 11 durch den in der Fig. 1 gezeigten Anschlagnocken 23 der Sanitärarmatur 2 verstellbar, wenn der Drehgriff 1 in der Drehrichtung 8 um die Drehachse 13 gedreht wird. Die Fig. 2 zeigt den Innengriff 3 mit dem Zwischenanschlag 6 in einer Stellung, die eine Mischwassertemperatur von 40 °C signalisiert, wenn der in der Fig. 1 gezeigte Anschlagnocken 23 der Sanitärarmatur 2 mit dem Zwischenanschlag 6 in Eingriff steht. Die Fig. 3 zeigt den Innengriff 3 mit dem Zwischenanschlag 6 in einer Stellung, die eine Mischwassertemperatur von 35 °C signalisiert, wenn der in der Fig. 1 gezeigte Anschlagnocken 23 der Sanitärarmatur 2 mit dem Zwischenanschlag 6 in Eingriff steht. Die Fig. 4 zeigt den Innengriff 3 mit dem Zwischenanschlag 6 in einer Stellung, die eine Mischwassertemperatur von 43 °C signalisiert, wenn der in der Fig. 1 gezeigte Anschlagnocken 23 der Sanitärarmatur 2 mit dem Zwischenanschlag 6 in Eingriff steht.

Die vorliegende Erfindung zeichnet sich insbesondere dadurch aus, dass bei verschiedenen durch einen Zwischenanschlag zu signalisierenden Mischwassertemperaturen stets ein optimaler Drehwinkelbereich des Drehgriffs zum Erreichen des Kaltwasseranschlags und Heißwasseranschlags vorliegt.

### Bezugszeichenliste

- 1: Drehgriff
- 2: Sanitärarmatur
- 3: Innengriff
- 4: Unterteil
- 5: Oberteil
- 6: Zwischenanschlag
- 7: Schleppanschlag
- 8: Drehrichtung
- 9: Schleppbahn
- 10: Kaltwasseranschlag
- 11: Heißwasseranschlag
- 12: erste Nut
- 13: Drehachse
- 14: Griffhülle
- 15: zweite Nut
- 16: Reguliermutter
- 17: erste Riefenverzahnung
- 18: zweite Riefenverzahnung
- 19: dritte Riefenverzahnung
- 20: innere Befestigungsschraube
- 21: äußere Befestigungsschraube
- 22: Griffkappe
- 23: Anschlagnocken
- 24: dritte Nut
- 25: Skala
- 26: Markierung
- 27: radiale Richtung
- 28: vierte Riefenverzahnung

## Patentansprüche

1. Drehgriff (1) für ein thermostatisch geregeltes Ventil einer Sanitärarmatur (2), aufweisend einen Innengriff (3) mit einem Unterteil (4) und einem Oberteil (5), wobei an dem Unterteil (4) ein Zwischenanschlag (6) und ein Schleppanschlag (7) angeordnet sind, **dadurch gekennzeichnet, dass**
der Schleppanschlag (7) in einer Drehrichtung (8) des Drehgriffs (1) entlang einer Schleppbahn (9) zwischen einem Kaltwasseranschlag (10) und einem Heißwasseranschlag (11) bewegbar ist, und wobei das Unterteil (4) und das Oberteil (5) des Innengriffs (3) zur Einstellung einer durch den Zwischenanschlag (6) signalisierte Mischwassertemperatur eines mit der Sanitärarmatur (2) gezapften Mischwassers relativ zueinander verdrehbar sind.

2. Drehgriff (1) nach Patentanspruch 1, wobei die signalisierte Mischwassertemperatur 35 °C bis 43 °C beträgt.

3. Drehgriff (1) nach einem der vorhergehenden Patentansprüche, wobei das Oberteil (5) zumindest teilweise in dem Unterteil (4) angeordnet ist.

4. Drehgriff (1) nach einem der vorhergehenden Patentansprüche, wobei das Unterteil (4) eine teilkreisförmige erste Nut (12) aufweist, in der das Oberteil (5) zumindest teilweise angeordnet ist.

5. Drehgriff (1) nach einem der vorhergehenden Patentansprüche, wobei der Kaltwasseranschlag (10) und der Heißwasseranschlag (11) an dem Oberteil (5) des Innengriffs (3) angeordnet sind.

6. Drehgriff (1) nach einem der vorhergehenden Patentansprüche, wobei sich der Kaltwasseranschlag (10) und der Heißwasseranschlag (11) zumindest teilweise parallel zu einer Drehachse (13) des Drehgriffs (1) erstrecken.

7. Drehgriff (1) nach einem der vorhergehenden Patentansprüche, wobei das Unterteil (4) und das Oberteil (5) mittels einer Griffhülle (14) gegen ein Verdrehen zueinander gesichert sind.

8. Drehgriff (1) nach Patentanspruch 7, wobei das Unterteil (4) eine zweite Nut (15) aufweist, in die die Griffhülle (14) eingreift.

9. Drehgriff (1) nach Patentanspruch 8, wobei sich die zweite Nut (15) parallel zu einer Drehachse (13) des Drehgriffs (1) erstreckt.

10. Drehgriff (1) nach einem der vorhergehenden Patentansprüche, wobei eine Drehbewegung des Drehgriffs (1) über das Oberteil (5) des Innengriffs (3) auf eine Reguliermutter (16) des Ventils übertragbar ist.

## Claims

1. Rotary knob (1) for a thermostatically controlled valve of a sanitary fitting (2), having an internal knob (3) with a lower part (4) and an upper part (5), wherein on the lower part (4) there are arranged an intermediate stop (6) and a draggable stop (7),
**characterised in that**
the draggable stop (7) is movable in a direction of rotation (8) of the rotary knob (1) along a drag path (9) between a cold water stop (10) and a hot water stop (11), and wherein the lower part (4) and the upper part (5) of the internal knob (3) are rotatable relative to one another to set a mixed water temperature of mixed water drawn with the sanitary fitting (2), which mixed water temperature is signalled by the intermediate stop (6).

2. Rotary knob (1) according to claim 1, wherein the signalled mixed water temperature is from 35°C to 43°C.

3. Rotary knob (1) according to either one of the preceding claims, wherein the upper part (5) is arranged at least partly in the lower part (4).

4. Rotary knob (1) according to any one of the preceding claims, wherein the lower part (4) has a part-circular first groove (12) in which the upper part (5) is at least partly arranged.

5. Rotary knob (1) according to any one of the preceding claims, wherein the cold water stop (10) and the hot water stop (11) are arranged on the upper part (5) of the internal knob (3).

6. Rotary knob (1) according to any one of the preceding claims, **characterised in that** the cold water stop (10) and the hot water stop (11) extend at least partly parallel to a rotational axis (13) of the rotary knob (1).

7. Rotary knob (1) according to any one of the preceding claims, wherein the lower part (4) and the upper part (5) are secured by means of a knob cover (14) against rotation relative to one another.

8. Rotary knob (1) according to claim 7, wherein the lower part (4) has a second groove (15) in which the knob cover (14) engages.

9. Rotary knob (1) according to claim 8, wherein the second groove (15) extends parallel to a rotational axis (13) of the rotary knob (1).

10. Rotary knob (1) according to any one of the preceding claims, wherein a rotational movement of the rotary knob (1) is transmissible *via* the upper part (5) of the internal knob (3) to a control nut (16) of the valve.

## Revendications

1. Poignée rotative (1) destinée à une vanne à commande thermostatique d'une robinetterie sanitaire (2) comprenant une poignée interne (3) ayant une partie inférieure (4) et une partie supérieure (5), sur la partie inférieure (4) étant montées une butée intermédiaire (6) et une butée d'entraînement (7),
**caractérisée en ce que**
la butée d'entraînement (7) est mobile dans la direction de rotation (8) de la poignée rotative (1) le long d'une voie d'entraînement (9) entre une butée d'eau froide (10) et une butée d'eau chaude (11) et la partie inférieure (4) et la partie supérieure (5) de la poignée interne (3) sont mobiles en rotation l'une par rapport à l'autre pour permettre de régler une température signalisée par la butée intermédiaire (6) de l'eau mélangée soutirée avec la robinetterie sanitaire (2).

2. Poignée rotative (1) conforme à la revendication 1,
dans laquelle la température de l'eau mélangée signalisée est égale à 35°C à 43°C.

3. Poignée rotative (1) conforme à l'une des revendications précédentes, dans laquelle la partie supérieure (5) est montée au moins partiellement dans la partie inférieure (4).

4. Poignée rotative (1) conforme à l'une des revendications précédentes, dans laquelle la partie inférieure (4) comporte une première rainure (12) de forme partiellement circulaire dans laquelle est montée au moins partiellement la partie supérieure (5).

5. Poignée rotative (1) conforme à l'une des revendications précédentes, dans laquelle la butée d'eau froide (10) et la butée d'eau chaude (11) sont positionnées sur la partie supérieure (5) de la poignée interne (3).

6. Poignée rotative (1) conforme à l'une des revendications précédentes, dans laquelle la butée d'eau froide (10) et la butée d'eau chaude (11) s'étendent au moins partiellement parallèlement à l'axe de rotation (13) de la poignée rotative (1).

7. Poignée rotative (1) conforme à l'une des revendications précédentes, dans laquelle la partie inférieure (4) et la partie supérieure (5) sont bloquées l'une par rapport à l'autre au moyen d'une gaine de préhension (14) pour empêcher une rotation.

8. Poignée rotative (1) conforme à la revendication 7,
dans laquelle la partie inférieure (4) comporte une seconde rainure (15) dans laquelle vient en prise la gaine de préhension (14).

9. Poignée rotative (1) conforme à la revendication 8,
dans laquelle la seconde rainure (15) s'étend parallèlement à l'axe de rotation (13) de la poignée rotative (1).

10. Poignée rotative (1) conforme à l'une des revendications précédentes,
dans laquelle une rotation de la poignée rotative (1) peut être transmise par l'intermédiaire de la partie supérieure (5) de la poignée interne (3) à un écrou de réglage (16) de la vanne.
